# EUROPEAN PATENT SPECIFICATION

(11) **EP 3 429 134 B1**
(45) Date of publication and mention of the grant of the patent: **01.01.2020**
(21) Application number: 18180934.4
(22) Date of filing: 29.06.2018
(51) Int. Cl.: H04L 12/28

(54) **AUTOMATION NETWORK**
AUTOMATIONSNETZWERK
RÉSEAU D'AUTOMATION

(30) Priority: 14.07.2017 IT 201700079590
(43) Date of publication of application: 16.01.2019
(73) Proprietor: Cherubini S.p.A., 25081 Bedizzole (BS) (IT)
(72) Inventor: CHERUBINI, Lionello, I-25081 Bedizzole, BRESCIA (IT)
(74) Representative: Chimini, Francesco

(56) References cited:
- EP-A1- 2 934 036
- US-A1- 2010 272 093
- US-B1- 6 891 838

## Description

The present invention relates to an automation network, in particular a home automation network for residential environments.

Current automation systems, based on wireless communication, have two main drawbacks: the first is that they require an installation with a predetermined topology (distribution of star nodes, tree nodes, etc.); the second is the need to have one or more nodes with particular data centralization and/or routing features, and which often must be installed in specific locations within the network.

Some systems compensate for the first drawback (for example, those based on mesh networks allow a free topology), but require the presence of a specific device (base station) which contains the network programming database and/or which performs the mapping of the other nodes of the network and the control of the signal routing path.

Other systems compensate for the second drawback (such as those based on Wi-Fi networks), but require registration and connection to cloud infrastructures provided by the manufacturer.

These drawbacks severely limit the spread of wireless automation systems, as they require installation by experienced personnel, the purchase of the base station and/or registration to cloud infrastructures.

The object of the present invention is to provide an automation network and a method for controlling sensors and/or actuators capable of exceeding the limits set forth above with reference to networks according to the prior art.

In particular, the invention aims to provide a wireless automation network that also allows the end user, not particularly trained, to easily perform the installation of the network itself, for example in his residential environment, without the need to install a base station and without the need to connect to cloud infrastructures.

Said object is achieved with an automation network according to claim 1 and with a method of controlling actuators and/or sensors according to claim 9. The dependent claims describe preferred embodiments of the invention.

According to claim 1, an automation network is provided, particularly for residential environments, comprising a plurality of nodes. Each node comprises at least one actuator unit suitable for driving a load and/or at least one sensor unit suitable for receiving data from a sensor, a memory of module, and a communication module suitable for receiving and transmitting data via radio to and from at least some of the other nodes of the network according to a network protocol.

This communication module is programmed to receive from at least one nearby node an input data packet comprising command instructions for the actuator unit thereof or to the actuator unit of other nodes, and/or the status of the actuator unit and/or the sensor unit of all nodes, and to re-transmit an output data packet comprising the data of the input data packet updated with the status data of the respective actuator unit and/or of the respective sensor unit.

An updated copy of all the information regarding the status of the actuator units and/or sensor units of all modules, an updated copy of the command instructions sent, programming and configuration information for all nodes is stored in the module memory. The input and output data packets also include such programming and configuration information for all nodes.

In the remainder of the description, "programming information" refers to all information concerning the management and execution of the operating programs of the sensors and/or actuators.

For example, the programming information is related to:
- user profiles (for example, "administrator" profile, i.e. who can edit all the system information, or "Standard user" profile, i.e. who can only use the system);
- groups of objects (for example, "Shutters north side" group): it is an information that is used to send a single open or close command to all the objects belonging to the same group, instead of several commands to each single actuator;
- scenarios (e.g. "Evening"): information that is used to send a single command that performs multiple functions on several non-homogeneous objects, instead of several commands to perform many functions, all aimed at causing a change in the state of the environment, for example, switching off all lights and lowering the shutters in the case of the "Evening" scenario;
- scheduling, that is, the programmed execution of a single or group command, or the activation of a scenario, in predetermined days and times.

In the remainder of the description, by "configuration information or parameters" it is meant, for each individual object, the specific features of the installation (such as the type of shutter or blind, the open/close times, the name of the object and room in which it is located).

According to an aspect of the invention, such programming and configuration information is stored solely and exclusively in the memory module of the nodes.

Therefore, the presence of a specific device (base station) suitable for containing the network programming database and/or mapping the other nodes in the network and controlling the signal routing path is not required, nor is it necessary to register and connect to cloud infrastructures provided by the network provider.

In fact, the same nodes contain, in the respective module memories, and transmit to each other all the updated information necessary for the network operation.

Optionally, the network is connected to a control device, such as a mobile device or a fixed control unit, by means of which the user gives commands to the actuators controlled by the network. However, it should be underlined that the command sent is stored in all the nodes of the network and the status of the actuator after execution of the command is also transmitted and stored in all nodes of the network.

In one embodiment, the communication module is programmed to transmit the output data packet only in the case that the input data packet varies with respect to the content of the memory module and/or in the case of variation in the status of the respective actuator unit and/or the respective sensor unit. In this way, a proliferation of the messages exchanged between the nodes can be prevented, for example at predetermined time intervals.

In one embodiment, each node comprises an application microcontroller operatively connected to the node memory and programmed to control the actuator unit and/or the sensor unit and to transmit/receive data to and from the communication module.

In one embodiment, the communication module comprises a data transmission circuit and a microcontroller module programmed to manage the network protocol and to transfer data to and from the application microcontroller.

In one embodiment, at least one of the network nodes further comprises hardware and software means suitable for implementing data communication with the Internet. In this way, the command instructions given by the user can be sent to the network nodes even remotely.

The invention also relates to a method of controlling actuators and/or sensors which employs the automation network described above. The method provides that each node receives from at least one nearby node an input data packet comprising command instructions intended for the actuator unit thereof or the actuator unit of other nodes, and/or the status of the actuator units and/or the sensor units of all the nodes, re-transmits an output data packet comprising the data of the input data packet updated with the status data of the respective actuator unit and/or of the respective sensor unit and saves in the memory module thereof an updated copy of all the information regarding the status of the actuator units and/or sensor units of all the nodes, an updated copy of the command instructions sent, and the programming and configuration information of all the nodes. The input and output data packets include such programming and configuration information for all nodes.

In one embodiment, each node transmit the output data packet only in the case that the input data packet varies with respect to the content of the respective memory module and/or in the case of variation in the status of the respective actuator unit and/or the respective sensor unit.

Moreover, at least some of the nodes may comprise their own clock and are programmed to perform an action upon reaching a predetermined deadline. Therefore, such nodes can also operate in complete autonomy, that is, without receiving command instructions through other nodes.

In one embodiment, the nodes communicate with each other via a standard Bluetooth Low Energy (hereafter BLE) wireless technology.

In any case, the communication software protocol allows creating a network capable of propagating information to all nodes. In fact, each node has at the same time the role of generator, user and repeater of information.

The network therefore has a free topology.

Advantageously, the presence of a network controller, or of nodes with specific roles of network route mapping, is not necessary.

Advantageously, the network is capable of automatically adapting and finding an alternative route to propagate information in the event that it fails to communicate with one or more nodes, or if new nodes are added to the network.

In one embodiment, each node can communicate directly also with user interface devices provided with a wireless communication protocol, for example mobile devices such as smartphones or tablets.

In one embodiment, each node is capable of identifying itself and signal its presence to such a user interface device, for example automatically or following a user command on the interface device.

In one embodiment, all the information exchanged by the network nodes is subject to encryption (e.g. AES 128 bit) to ensure data security against unauthorized access.

Advantageously, in addition to being part of the communication infrastructure, each node is an integral part of the automation superstructure since, having a permanent memory unit, it stores and shares all the programming information of the entire network.

Moreover, due to its own clock, a node is capable of operating autonomously, even in the absence of connection with other nodes or with mobile control and supervision devices.

Each node, as specified above, has the necessary hardware to execute the actuations and/or detect the magnitudes of integrated or external sensors.

These features allow the creation of an autonomous network that can work locally in a residential environment using only the nodes of the network, and which can also be programmed only with the help of a mobile device with a wireless connection and relative application, without the need for other interface devices.

In one embodiment, at least one node of the network is provided with hardware and software means suitable for interfacing with the Internet and with the associated communication infrastructures (hereafter cloud), which may include dedicated servers and applications.

Due to this node, in the continuation of the description also referred to as "concentrator", one has the opportunity to interact with the network from outside, taking advantage of the internet connection and associated cloud services.

As mentioned, the network can be controlled by one or more users through a supervision application installed on fixed or mobile devices provided with a wireless communication protocol connection, such as BLE, graphic interface and operating system (for example smartphones and tablets with touch screen, Android-iOS etc.).

The supervision application allows easily and intuitively programming the devices in the automation network.

For example, the supervision application allows:
- managing user profiles for different access levels (administrator, programmer, user);
- configuring the nodes, for example customizing the parameters and their identification in the environment in which they are located;
- managing groups, scenarios and events programmable at pre-established times;
- synchronizing all the clocks present in the nodes.

An example of a node configuration is the setting of the open and close times of a motorized shutter located in a room, and the assignment of the room name.

The features and the advantages of the automation network and of the control method according to the invention shall be made readily apparent from the following description of preferred embodiments thereof, provided purely by way of a non-limiting example, with reference to the accompanying figures, in which:

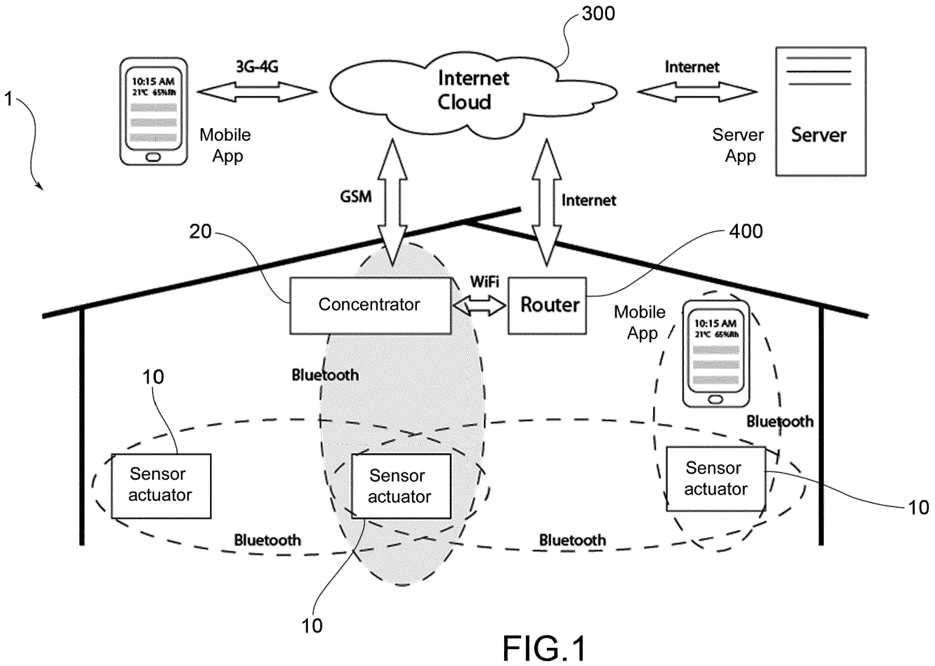

- figure 1 is a diagram of the automation network according to the invention;

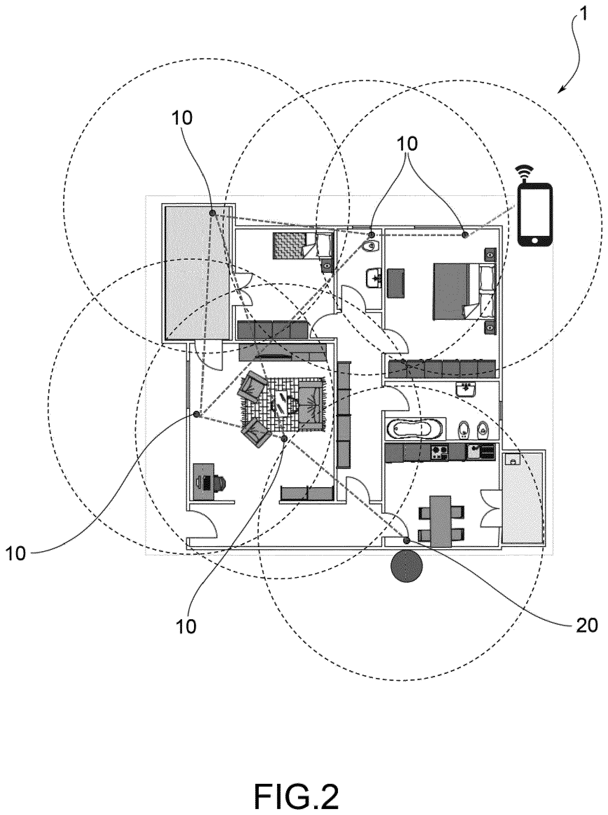

- figure 2 shows an exemplary positioning of the nodes of a domotic network in a home;

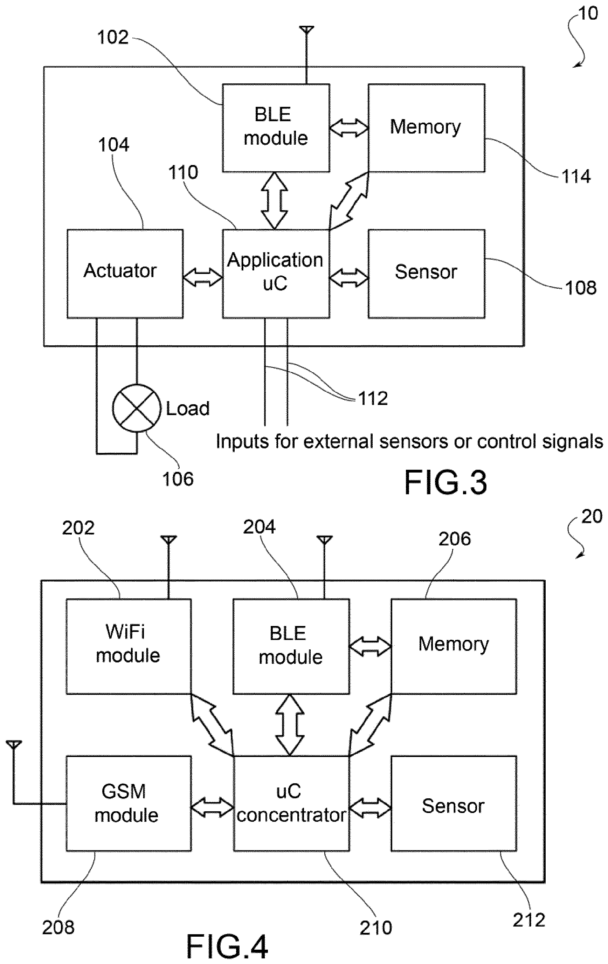

- figure 3 is a block diagram of a network node;
- figure 4 is a block diagram of a network concentrator node; and
- figure 5 is an exemplary connection of some nodes of a network to one another and to a supervision device.

In said drawings, reference numeral 1 indicates an automation network according to the invention as a whole.

The network 1 comprises a plurality of nodes 10.

According to an aspect of the invention, each node 10 is an electronic device which comprises:
- a communication module 102, for example based on Bluetooth Low Energy (BLE) wireless technology: a device suitable for receiving and transmitting information via radio to and from the network;
- an actuator unit 104: a switching device for supplying a load 106;
- a sensor unit 108: a device suitable for receiving data from a sensor internal or external to the node, for example data relating to environmental conditions or logic inputs;
- an application microcontroller 110: a microcontroller programmed with management firmware specific to the application for which the node is intended. It is provided with connections for data transfer to/from the communication module 102 for the management of the actuator unit 104 and the sensor unit 108, and optionally inputs 112 for other signals coming from external sensors or control signals;
- node memory 114: a device suitable for storing information permanently; it can be integrated in the application microcontroller 110 or in the communication module 102.

In each node 10 there is the communication module 102, the application microcontroller 110 and the node memory 114.

Depending on the type of node, there may be one or more actuator units 104 and/or one or more sensor units 108.

The communication module 102 transfers the information from the network to the application microcontroller 110 of the node, and vice versa.

In one embodiment, the communication module 102 contains the following elements:
- a radio frequency transmission and reception circuit and antenna;
- a module microcontroller programmed with firmware to manage the network protocol and transfer data to/from the application microcontroller;
- calendar clock.

In one embodiment, the communication module management firmware is programmed to perform the following functions:
- transferring command instructions, magnitudes measured by the sensors and configuration parameters, from the network to the application microcontroller;
- transferring the operating status of the actuator unit, the magnitudes measured by the sensors and the programming and configuration information, from the application microcontroller to the network;
- storing configuration and node programming information, such as user management and event programming, coming from the network;
- checking scheduled event and transmitting implementation commands to the application microcontroller.

As mentioned above, by configuration parameters or information it is meant all the information necessary for the application microcontroller to interface correctly to the actuator unit and/or the sensor unit connected thereto. For example, for an actuator object intended for the control of roller shutter motors, the configuration parameters may be:
- type of roller shutter (such as curtain, screen, Venetian blind, shutter, etc.);
- type of motor (for example electromechanical or pulsed, or electronic);
- total open/close travel time;
- preferred opening or closing position.

In one embodiment, such configuration information is set by the user through the graphical interface of a mobile application, for example during network installation.

It should be noted that the programming and configuration information must be able to be written and re-read as needed from/to the supervision device, for example through the mobile application, since the only place where such information is permanently stored is the module memory of each node.

In one embodiment, the management firmware of the application microcontroller 110 is programmed to perform the following functions:
- transferring data from/to the communication module 102;
- driving the actuator unit 104;
- reading data from the sensor unit 108.

The actuator unit 104 may be implemented in different ways, depending on the load to be controlled. For example, such an actuator unit may comprise:
- one or more electromechanical relays with contacts suitable for supplying alternating voltage power loads (for example lamps, motors);
- one or more semiconductor switches (for example Mos-fet) for supplying direct voltage power loads (for example LED lamps);
- one or more semiconductor switches (for example an optocoupler) for controlling low voltage and power signals (for example control units, adjustable power supplies).

The sensor, either internal or external, may be of different nature, depending on the magnitude to be measured (for example, temperature, humidity, brightness level) .

An example of a concentrator node 20 will now be described, i.e. a node provided with hardware and software means suitable for implementing a data communication with the Internet 300.

In one embodiment, the concentrator node 20 comprises the following elements:
- WiFi module 202: this device is suitable for receiving and transmitting information via WiFi radio to and from an access point or wireless router 400 connected to the Internet 300;
- Communication module 204 (for example based on BLE technology): a device suitable for receiving and transmitting information via radio to and from the network;
- Node memory 206: a device suitable for storing information permanently; it can be integrated in the application microcontroller or in the communication module;
- GSM module 208: a device for receiving and transmitting packet data via GSM radio to and from the cellular network; through specific services offered by the telephone operator, one can connect to the Internet 300;
- concentrator microcontroller 210: microcontroller programmed with management firmware specific to the application of the concentrator. It is provided with connections for data transfer to/from GSM modules, Wi-Fi and communication module. It may also be provided with connections for signals coming from internal or external sensors;
- Sensor unit 212: a device for detecting data from internal or external sensors, for example sensors of environmental conditions, or logic inputs.

In the concentrator node 20 there is the communication module 204 (BLE), the Wi-Fi module 202 and/or the GSM module 208, the concentrator microcontroller 210 and the node memory 206. One or more sensor units 212 may be present.

Therefore, the concentrator node has the task of bridging the BLE network and the cloud, whereby on the cloud side it needs a Wi-Fi and/or GSM connectivity function. For example, the concentrator's firmware can detect whether the Wi-Fi module 202 or the GSM module 208 is installed in the node, and decide which one to use if both are present.

The communication module (BLE) 204 transfers the information from the network to the concentrator microcontroller, and vice versa.

In one embodiment, the communication module 204 includes the following elements:
- Radio frequency transmission and reception circuit and antenna;
- Module microcontroller, programmed with firmware to manage the network protocol and transfer data to the concentrator microcontroller 210;
- Calendar clock.

In one embodiment, the communication module management firmware is programmed to perform the following functions:
- transferring command instructions, magnitudes measured by the sensors and programming and configuration parameters, from the network to the concentrator microcontroller;
- transferring the magnitudes measured by the sensors and the programming and configuration parameters from the concentrator microcontroller to the network;
- storing configuration and concentrator programming information, such as user management and event programming, coming from the network;
- periodically sending the time signal for the synchronization of all the clocks present in the other network nodes.

In one embodiment, the concentrator microcontroller management firmware is programmed to perform the following functions:
- Transferring data from/to the communication module:
- Transferring data from/to the Wi-Fi module;
- Transferring data from/to the GSM module;
- Acquiring the time signal from the Internet;
- Reading data from the sensor.

The sensor, either internal or external, may be of different nature, depending on the magnitude to be measured (for example, temperature, humidity, brightness level).

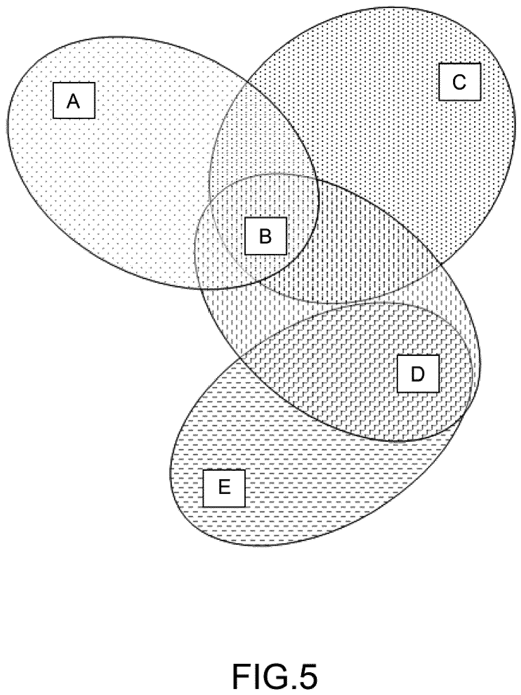

An example of operation of an automation network will now be described, with reference to Figure 5, made up of the following elements:
- node A with temperature sensor;
- node B with wind sensor;
- node C with thermostat actuator;
- node D with actuator for shutter motor;
- supervision device E.

As schematized in figure 5, node A is capable of communicating only with node B; node B, in addition to node A, is capable of communicating with nodes C and D. The supervision device E, on which the management application is installed, is capable of communicating only with node D.

Even in the absence of communication with the supervision device E, the network is capable of propagating all system information to all nodes.

For example, node A periodically transmits a data packet containing the value of the read temperature. Node B receives this packet and, while not using this information for its own operation, retransmits the data packet by adding the detected wind speed, together with the temperature received from node A. Node C receives this packet, uses only the temperature information for its operation, and retransmits a data packet containing: wind speed, temperature, and its own on/off status. Node B receives this package, updates it with the new wind speed and retransmits it. Node D receives this package, uses the wind speed information to decide whether to close the shutter (to protect it from damage), adds the position of the shutter, and retransmits it.

At this time, the data package is complete with all sensor and actuator information. While the same package travels backwards, being updated from time to time with new information, up to node A, the supervision device E is capable of receiving this package from node D and viewing the complete system status.

With the same mechanism, each command sent by the supervision device to the nearest node is propagated to all the nodes in the network. Only the recipient nodes of the command will use the command information contained in the data package, while the others will only retransmit it, updating it with their status information.

Each node in the network therefore always has an updated copy of all the information regarding the status, the last commands sent, and the programming of the entire automation network.

To prevent an uncontrolled proliferation of the packets containing the data, and a consequent clogging of the radio band, the firmware contained in the microcontrollers of the communication module uses an algorithm, based on version counters, which allows the retransmission of the packet only if there is new information additions, or only if there is a variation in the content.

## Claims

1. An automation network, in a residential environment, comprising a plurality of nodes (10), each of which comprises at least one actuator unit (104) suitable for driving a load (106) and/or at least one sensor unit (108) suitable for receiving data from a sensor, a memory module (114), and a communication module (102) suitable for receiving and transmitting data via radio to and from at least some of the other network nodes according to a network protocol, said communication module (102) being programmed to receive from at least one nearby node an input data packet comprising command instructions for the actuator unit thereof or the actuator unit of other nodes, and/or the status of the actuator units and/or the sensor units of all the nodes, programming and configuration information of all the nodes, and to re-transmit an output data packet comprising the data of the input data packet updated with the status data of the respective actuator unit and/or of the respective sensor unit, the automation network being **characterized in that** in the memory module (114) of each node an updated copy of all the information regarding the status of the actuator units (104) and/or sensor units (108) of all the nodes, an updated copy of the command instructions sent and the programming and configuration information of all the nodes are saved.

2. An automation network according to the preceding claim, wherein the programming and configuration information is stored solely and exclusively in the memory module (114) of each node.

3. A network according to claim 1 or 2, wherein said programming information comprises information relating to: user profiles, object groups, scenarios, scheduling.

4. An automation network according to any one of the preceding claims, wherein the communication module (102) is programmed to transmit the output data packet only in the case that the input data packet varies with respect to the content of the memory module and/or in the case of variation in the status of the respective actuator unit and/or the respective sensor unit.

5. An automation network according to any one of the preceding claims, comprising an application microcontroller (110) operatively connected to the node memory (114) and programmed to control the actuator unit and/or the sensor unit and to transmit/receive data to and from the communication module.

6. An automation network according to the preceding claim, wherein the communication module (102) comprises a data transmission circuit and a microcontroller module programmed to manage the network protocol and to transfer data to and from the application microcontroller.

7. An automation network according to any one of the preceding claims, wherein one (20) of the nodes further comprises hardware and software means (202) suitable for implementing data communication over the Internet.

8. An automation network according to any one of the preceding claims, wherein each node further comprises a clock thereof and is programmed to execute an event upon reaching a predetermined deadline.

9. A method for the control of actuators and/or sensors of an automation network according to any one of the preceding claims wherein each node receives from at least one nearby node an input data packet comprising command instructions intended for the actuator unit thereof or the actuator unit of other nodes, and/or the status of the actuator units and/or the sensor units of all the nodes, programming and configuration information of all the nodes, re-transmits an output data packet comprising the data of the input data packet updated with the status data of the respective actuator unit and/or of the respective sensor unit, the method being **characterized in that** each node saves in the memory module thereof an updated copy of all the information regarding the status of the actuator units and/or sensor units of all the nodes, an updated copy of the command instructions sent, and the programming and configuration information of all the nodes.

10. A method according to the preceding claim, wherein said programming information comprises information relating to: user profiles, object groups, scenarios, scheduling.

11. A method according to claim 9 or 10, wherein each module transmits the output data packet only in the case the input data packet varies with respect to the content of the memory module and/or in the case of variation in the status of the respective actuator unit and/or the respective sensor unit.

## Patentansprüche

1. Automationsnetzwerk in einem Wohnumfeld umfassend eine Vielzahl von Knoten (10), die jeweils umfassen: mindestens eine Aktuatoreinheit (104), die zum Antreiben einer Last (106) geeignet ist, und/oder mindestens eine Sensoreinheit (108), die zum Empfangen von Daten von einem Sensor geeignet ist, ein Speichermodul (114), und ein Kommunikationsmodul (102), das zum Empfangen und Übertragen von Daten über Funk zu und von mindestens einigen der anderen Netzwerkknoten gemäß einem Netzwerkprotokoll geeignet ist, wobei das Kommunikationsmodul (102) programmiert ist, ein Eingangsdatenpaket von mindestens einem nahegelegenen Knoten zu empfangen, das Befehlsanweisungen für dessen Aktuatoreinheit oder die Aktuatoreinheit der anderen Knoten, und/oder den Status der Aktuatoreinheiten und/oder der Sensoreinheiten aller Knoten, Programmier- und Konfigurationsinformationen aller Knoten umfasst, und ein Ausgangsdatenpaket erneut zu übertragen, das die Daten des Eingabedatenpakets umfasst, die mit den Statusdaten der jeweiligen Aktuatoreinheit und/oder der jeweiligen Sensoreinheit aktualisiert wurden, wobei das Automationsnetzwerk **dadurch gekennzeichnet ist, dass** in dem Speichermodul (114) jedes Knotens eine aktualisierte Kopie aller Informationen bezüglich des Status der Aktuatoreinheiten (104) und/oder Sensoreinheiten (108) aller Knoten, eine aktualisierte Kopie der gesendeten Befehlsanweisungen und der Programmier- und Konfigurationsinformationen aller Knoten gespeichert sind.

2. Automationsnetzwerk nach dem vorhergehenden Anspruch, wobei die Programmier- und Konfigurationsinformationen einzig und ausschließlich in dem Speichermodul (114) jedes Knotens gespeichert sind.

3. Automationsnetzwerk nach Anspruch 1 oder 2, wobei die Programmierinformationen Informationen in Bezug zu Benutzerprofilen, Objektgruppen, Szenarien und Planung umfassen.

4. Automationsnetzwerk nach einem beliebigen der vorhergehenden Ansprüche, wobei das Kommunikationsmodul (102) programmiert ist, das Ausgabedatenpaket nur in dem Fall, in dem das Eingabedatenpaket im Hinblick auf den Inhalt in dem Speichermodul variiert, und/oder in dem Fall von Variation in dem Status der jeweiligen Aktuatoreinheit und/oder der jeweiligen Sensoreinheit zu übertragen.

5. Automationsnetzwerk nach einem beliebigen der vorhergehenden Ansprüche, umfassend einen Anwendungs-Microcontroller (110), der betriebsmäßig mit dem Knotenspeicher (114) verbunden und programmiert ist, die Aktuatoreinheit und/oder Sensoreinheit zu steuern bzw. zu regeln und Daten an das und von dem Kommunikationsmodul zu übertragen/zu empfangen.

6. Automationsnetzwerk nach dem vorhergehenden Anspruch, wobei das Kommunikationsmodul (102) eine Datenübertragungsschaltung und ein Microcontroller-Modul umfasst, die programmiert sind, das Netzwerkprotokoll zu verwalten und Daten an und vom Anwendungs-Microcontroller zu übertragen.

7. Automationsnetzwerk nach einem beliebigen der vorhergehenden Ansprüche, wobei einer (20) der Knoten ferner Hardware- und Softwaremittel (202) umfasst, die für die Umsetzung der Datenkommunikation über das Internet geeignet sind.

8. Automationsnetzwerk nach einem beliebigen der vorhergehenden Ansprüche, wobei jeder Knoten ferner eine Uhr davon umfasst und programmiert ist, ein Ereignis beim Erreichen einer vorbestimmten Frist auszuführen.

9. Verfahren zum Steuern bzw. Regeln der Aktuatoren und/oder Sensoren eines Automationsnetzwerks nach einem beliebigen der vorhergehenden Ansprüche, wobei jeder Knoten ein Eingabedatenpaket von mindestens einem nahegelegenen Knoten empfängt, das Befehlsanweisungen, die für dessen Aktuatoreinheit oder für die Aktuatoreinheit der anderen Knoten vorgesehen ist, und/oder den Status der Aktuatoreinheiten und/oder Sensoreinheiten aller Knoten, Programmier- und Konfigurationsinformationen aller Knoten umfasst, und ein Ausgangsdatenpaket erneut überträgt, das die Daten des Eingabedatenpakets umfasst, die mit den Statusdaten der jeweiligen Aktuatoreinheit und/oder der jeweiligen Sensoreinheit aktualisiert wurden, wobei das Verfahren **dadurch gekennzeichnet ist, dass** jeder Knoten eine aktualisierte Kopie aller Informationen bezüglich des Status der Aktuatoreinheiten und/oder Sensoreinheiten aller Knoten, eine aktualisierte Kopie der gesendeten Befehlsanweisungen und der Programmier- und Konfigurationsinformationen aller Knoten in dessen Speichermodul speichert.

10. Verfahren nach dem vorhergehenden Anspruch, wobei die Programmierinformationen Informationen in Bezug zu Benutzerprofilen, Objektgruppen, Szenarien und Planung umfassen.

11. Verfahren nach Anspruch 9 oder 10, wobei jedes Modul das Ausgabedatenpaket nur in dem Fall, in dem das Eingabedatenpaket im Hinblick auf den Inhalt in dem Speichermodul variiert, und/oder in dem Fall von Variation in dem Status der jeweiligen Aktuatoreinheit und/oder der jeweiligen Sensoreinheit überträgt.

## Revendications

1. Réseau d'automation, dans un environnement résidentiel, comprenant une pluralité de nœuds (10), chacun comprend au moins une unité actionneur (104) appropriée pour entraîner une charge (106) et/ou au moins une unité capteur (108) appropriée pour recevoir des données en provenance d'un capteur, un module de mémoire (114), et un module de communication (102) approprié pour recevoir et transmettre des données par radio à et en provenance d'au moins certains des autres nœuds de réseau en fonction d'un protocole de réseau, ledit module de communication (102) étant programmé pour recevoir en provenance d'au moins un nœud proche un paquet de données d'entrée comprenant des instructions de commande pour l'unité actionneur de celui-ci ou l'unité actionneur d'autres nœuds, et/ou le statut des unités actionneurs et/ou des unités capteurs de tous les nœuds, des informations de programmation et de configuration de tous les nœuds, et pour retransmettre un paquet de données de sortie comprenant les données du paquet de données d'entrée mises à jour avec les données de statut de l'unité actionneur respective et/ou de l'unité capteur respective, le réseau d'automation étant **caractérisé en ce que**, dans le module de mémoire (114) de chaque nœud, une copie mise à jour de toutes les informations concernant le statut des unités actionneurs (104) et/ou unités capteurs (108) de tous les nœuds, une copie mise à jour des instructions de commande envoyées et des informations de programmation et de configuration de tous les nœuds sont sauvegardées.

2. Réseau d'automation selon la revendication précédente, dans lequel les informations de programmation et de configuration sont stockées entièrement et exclusivement dans le module de mémoire (114) de chaque nœud.

3. Réseau selon la revendication 1 ou 2, dans lequel lesdites informations de programmation comprennent des informations concernant : des profils utilisateurs, des groupes d'objets, des scénarios, une planification.

4. Réseau d'automation selon l'une quelconque des revendications précédentes, dans lequel le module de communication (102) est programmé pour transmettre le paquet de données de sortie uniquement dans le cas où le paquet de données d'entrée varie par rapport au contenu du module de mémoire et/ou dans le cas d'une variation du statut de l'unité actionneur respective et/ou de l'unité capteur respective.

5. Réseau d'automation selon l'une quelconque des revendications précédentes, comprenant un microcontrôleur d'applications (110) connecté opérationnellement à la mémoire de nœud (114) et programmé pour commander l'unité actionneur et/ou l'unité capteur et pour transmettre/recevoir des données à et en provenance du module de communication.

6. Réseau d'automation selon la revendication précédente, dans lequel le module de communication (102) comprend un circuit de transmission de données et un module de microcontrôleur programmé pour gérer le protocole de réseau et pour transférer les données à et en provenance du microcontrôleur d'applications.

7. Réseau d'automation selon l'une quelconque des revendications précédentes, dans lequel l'un (20) des nœuds comprend en outre des moyens matériels et logiciels (202) appropriés pour mettre en œuvre une communication de données sur l'Internet.

8. Réseau d'automation selon l'une quelconque des revendications précédentes, dans lequel chaque nœud comprend en outre une horloge de celui-ci et est programmé pour exécuter un événement une fois atteint un délai prédéterminé.

9. Procédé pour la commande d'actionneurs et/ou de capteurs d'un réseau d'automation selon l'une quelconque des revendications précédentes, dans lequel chaque nœud reçoit en provenance d'au moins un nœud proche un paquet de données d'entrée comprenant des instructions de commande destinées à l'unité actionneur de celui-ci ou l'unité actionneur d'autres nœuds, et/ou le statut des unités actionneurs et/ou des unités capteurs de tous les nœuds, des informations de programmation de configuration de tous les nœuds, retransmet un paquet de données de sortie comprenant les données du paquet de données d'entrée mises à jour avec les données de statut de l'unité actionneur respective et/ou de l'unité capteur respective, le procédé étant **caractérisé en ce que** chaque nœud sauvegarde dans le module de mémoire de celui-ci une copie mise à jour de toutes les informations concernant le statut des unités actionneurs et/ou unités capteurs de tous les nœuds, une copie mise à jour des instructions de commande envoyées, et les informations de programmation de configuration de tous les nœuds.

10. Procédé selon la revendication précédente, dans lequel lesdites informations de programmation comprennent des informations concernant : des profils utilisateurs, des groupes d'objets, des scénarios, une planification.

11. Procédé selon la revendication 9 ou 10, dans lequel chaque module transmet le paquet de données de sortie uniquement dans le cas où le paquet de données d'entrée varie par rapport au contenu du module de mémoire et/ou dans le cas d'une variation du statut de l'unité actionneur respective et/ou de l'unité capteur respective.
